# EUROPEAN PATENT SPECIFICATION

(11) **EP 4 445 584 B1**
(45) Date of publication and mention of the grant of the patent: **11.06.2025**
(21) Application number: 21851843.9
(22) Date of filing: 10.12.2021
(51) Int. Cl.: H04L 41/5009, H04W 24/04, H04W 24/08

(54) **DETERMINATION OF INDIVIDUAL NODE CONTRIBUTIONS TO CLUSTER PERFORMANCE**
BESTIMMUNG DER EINZELNEN KNOTENBEITRÄGE ZUR CLUSTERLEISTUNG
DÉTERMINATION DE CONTRIBUTIONS DE NOEUDS INDIVIDUELS À DES PERFORMANCES DE GRAPPE

(43) Date of publication of application: 16.10.2024
(73) Proprietor: Telefonaktiebolaget LM Ericsson (publ), 164 83 Stockholm (SE)
(72) Inventor: FAPI, Emmanuel, Thepie, Côte-Saint-Luc, Quebec, H4W 2B1 (CA); DALAL, Hardik, Saint-Laurent, Quebec, H4N 0A7 (CA); ZHU, Zhongwen, Saint-Laurent, Quebec, H4R 3H7 (CA)
(74) Representative: Murgitroyd & Company
(86) International application number: PCT/IB2021/000842
(87) International publication number: WO 2023/105254

(56) References cited:
- US-A1- 2014 051 416
- US-A1- 2020 127 906
- US-A1- 2021 037 399

## Description

### TECHNICAL FIELD

The present disclosure generally relates to the field of multi-node analysis. More particularly, and not by way of any limitation, the present disclosure is directed to determining contributions of individual nodes that make up a cluster to a performance indicator based on measurement values used in the performance indicator's calculation.

### BACKGROUND

Performance indicators are used to provide quantifiable, objective indications of how complex systems, such as communication networks, are serving their users. At different stages of deployment a key set of performance indicators may be used to optimize operation of a system, and adherence to targets for various performance indicators may be used to determine whether the system is acceptable to be put into production. After deployment, performance indicators may continue to be used in system optimization, such as in monitoring the ongoing operation of the deployed system to identify trends and/or determining when a repair or other remediation may be necessary. However, there are problems associated with current approaches. For example, machine learning or artificial intelligence systems may be used to identify when an event impacting a performance indicator and requiring some type of remediation has occurred, but may not provide sufficient attribution information to explain their outputs to a user. Moreover, existing approaches may fail to address individual nodes in the context of the overall cluster in which they operate (or vice versa).

Accordingly, to address one or more of these or other issues, there is a need for improved technology for analysis of multi-node systems.

US2020/127906A1 relates to active measurements of performance indicators in a packet network, and more particularly to methods for determining a plurality of link performance indicators from a plurality of path measurements. An architecture is provided for active measuring and estimating of performance indicators (e.g., key performance indicators (KPIs)) in a packet network, such as packet delay (e.g., host-to-host latency), packet loss, or packet throughput, under network measurement resource constraints, such as limited use of network bandwidth. The method comprises
obtaining from at least one probe packet a plurality of path measurements of a plurality of host devices in a packet network comprising a plurality of links;
composing a plurality of linear equations, wherein each of the plurality of linear equations relates one of the plurality of path measurements between a respective pair of host devices of the plurality of host devices to at least one link performance indicator for a corresponding one or more of the plurality of links in the packet network between the respective pair of host devices;
determining a plurality of link performance indicators for the plurality of links of the packet network via a solution to the plurality of linear equations, wherein the plurality of link performance indicators comprises the at least one link performance indicator of each of the plurality of linear equations; and
generating a report comprising at least one of the plurality of link performance indicators.

### SUMMARY

The present disclosure is broadly directed to complex system analysis in which measurement values for individual nodes are used to evaluate those nodes' contributions to the performance of a cluster in which they operate. In a first aspect, as defined by the appended independent claim 1, an embodiment of a method for multi-node system analysis comprises receiving a performance indicator equation, wherein the performance indicator equation comprises a corresponding set of measurement parameters, and the performance indicator equation defines a relationship between the corresponding set of measurement parameters and a performance indicator corresponding to the performance indicator equation. In the first aspect, the method further comprises, for each node from a set of nodes, receiving, from a database, a set of measurement values for that node, wherein the set of measurement values for that node comprises a current value for each measurement parameter comprised by the performance indicator equation, and determining that node's contribution to a cluster value for the performance indicator corresponding to the performance indicator equation based on the set of measurement values for that node. In the first aspect, the method further comprises reporting performance indicator information for the set of nodes wherein the reported performance indicator information is based on relative contributions of each node from the set of nodes to the cluster value for the performance indicator corresponding to the performance indicator equation.

In further aspect, as defined by the appended independent claim 14, an embodiment of an apparatus for multi-node analysis comprising one or more processors configured with instructions operable to, when executed, perform methods set forth herein are provided.

In still further aspect, as defined by the appended independent claim 15, an embodiment of a computer program product for multi-node analysis comprising a non-transitory machine readable storage medium having program instructions thereon, which are configured to, when executed by one or more processors, perform methods set forth herein are provided. Further aspects are defined by the appended dependent claims.

Additional benefits and advantages of the disclosed technology will be apparent in view of the following description and accompanying figures.

### BRIEF DESCRIPTION OF THE DRAWINGS

Embodiments of the present disclosure are illustrated by way of example, and not by way of limitation, in the figures of the accompanying drawings in which like references indicate similar elements. It should be noted that different references to "an" or "one" embodiment in this disclosure are not necessarily to the same embodiment, and such references may mean at least one. Further, when a particular feature, structure, or characteristic is described in connection with an embodiment, it is submitted that it is within the knowledge of one skilled in the art to effect such feature, structure, or characteristic in connection with other embodiments whether or not explicitly described.

The accompanying drawings are incorporated into and form a part of the specification to illustrate one or more exemplary embodiments of the present disclosure. Various advantages and features of the disclosure will be understood from the following detailed description taken in connection with the appended claims and with reference to the attached drawing figures in which:
FIG. 1 depicts an example network architecture wherein the disclosed technology may be applied;
FIG. 2 depicts a high-level method for analyzing the operation of a node cluster with respect to a performance indicator based on the contributions of individual nodes to the cluster as a whole;
FIG. 3 depicts a method for determination of a contribution equation based on classification of a corresponding performance indicator equation;
FIG. 4 depicts a method for classifying a performance indicator equation into one of a plurality of predefined classes;
FIG. 5 depicts a method for applying different transformations when determining a contribution equation for a corresponding performance indicator equation;
FIG. 6 depicts an exemplary transformation of an input performance indicator equation to an abstract syntax tree;
FIG. 7 depicts a method in which performance indicator information is generated based on analysis of variability of weights within a cluster's nodes;
FIG. 8 depicts a method which could be used to focus analysis on nodes which are likely to be significant to a cluster's operation;
FIG. 9 depicts a method for determining a historical evaluation window which may be used to gather data for intertemporal analysis; and
FIG. 10 depicts a method which may be used to provide insights based on intertemporal correlations between node contributions.

### DETAILED DESCRIPTION

As set forth herein, aspects of the disclosed technology may be used in multi-node analysis of complex systems such as communication networks. This may include decomposing an equation defining a performance indicator used to measure the system's performance to create an equation for quantifying the contributions of individual nodes using the measurement parameters from the performance indicator equation. These contributions may then be used to increase the efficiency and effectiveness of monitoring, remediation, and other activities related to operation of the system, such as by providing insights into the performance of a cluster in which those nodes are located and/or supporting prioritization of repairs, replacements, upgrades or other actions which may impact nodes' operation. To illustrate how aspects of this technology may be made and used in practice, this disclosure provides various examples in the context of communication network analysis. In this context, references to "nodes" should be understood as referring to pieces of equipment (e.g., a router, switch, bridge, etc.) including hardware and software that communicatively interconnects with other equipment on a network. However, the disclosed technology may also be applied in other contexts (e.g., manufacturing), and so "nodes" can be more generally understood to refer to equipment which interacts with other nodes to perform a function (e.g., devices on an assembly line whose combined operation creates a finished product, or, in the context of a communication network, providing communication services). Accordingly, the examples provided of applications of the disclosed technology in the context of communication network analysis should be understood as being illustrative, rather than limiting.

Similarly, while the following description sets forth numerous specific details with respect to one or more potential embodiments, it should be understood that embodiments of the disclosed technology may be practiced without such specific details. In other instances, well-known circuits, subsystems, components, structures and techniques have not been shown in detail in order not to obscure the understanding of the example embodiments. Accordingly, it will be appreciated by one skilled in the art that one or more embodiments of the present disclosure may be practiced without such specific components-based details. It should be further recognized that those of ordinary skill in the art, with the aid of the detailed description set forth herein and taking reference to the accompanying drawings, will be able to make and use one or more embodiments without undue experimentation.

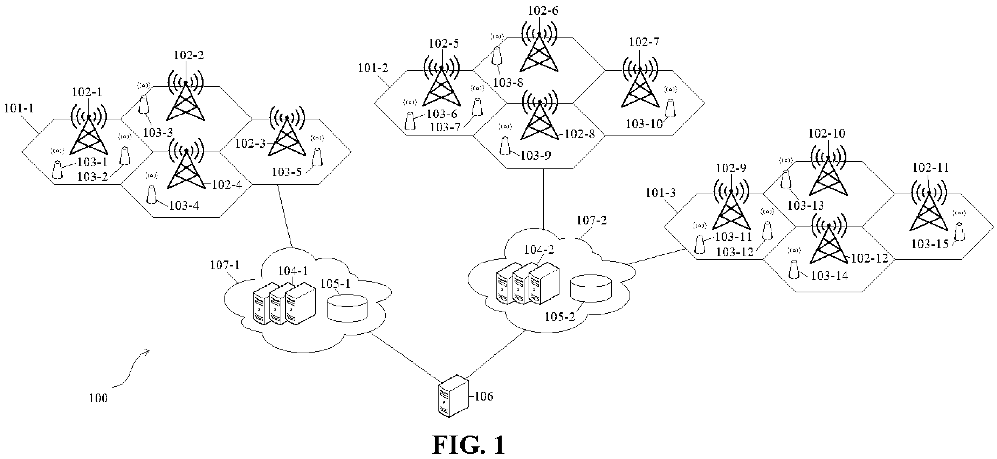

Turning now to the figures, FIG. 1 provides an example of a network architecture 100 which is in this disclosure to illustrate how aspects of the disclosed technology may be applied in practice. In the architecture of FIG. 1, there is depicted a plurality of radio access networks (RANs) 101-1 to 101-3, which may be understood as exemplary clusters of nodes for the purpose of illustrating how the operation of such systems may be optimized. In particular, each of the RANs 101-1 to 101-3 includes a plurality of towers 102-1 to 102-12 and nodes 103-1 to 103-15, and the disclosed technology may be used to determine the contributions of each of those nodes to the operation of their respective RAN, and to prioritize actions (e.g., repairs, upgrades, etc.) which may impact the performance of those nodes so as to achieve maximum impact for optimizing a RAN. As described in more detail herein, this may include gathering measurement values for those nodes. This data may include, for example, measurement values for a set of measurement parameters for particular periods of time and particular nodes (e.g., the number of attempts by a management element to establish a radio resource control connection, which may be abbreviated pmRrcConnEstabAtt, every 15 minutes). This data may then be stored in databases 105-1 or 105-2 hosted in operator systems 107-1 or 107-2 of the network operators for the illustrated RANs 101-1 to 101-3.

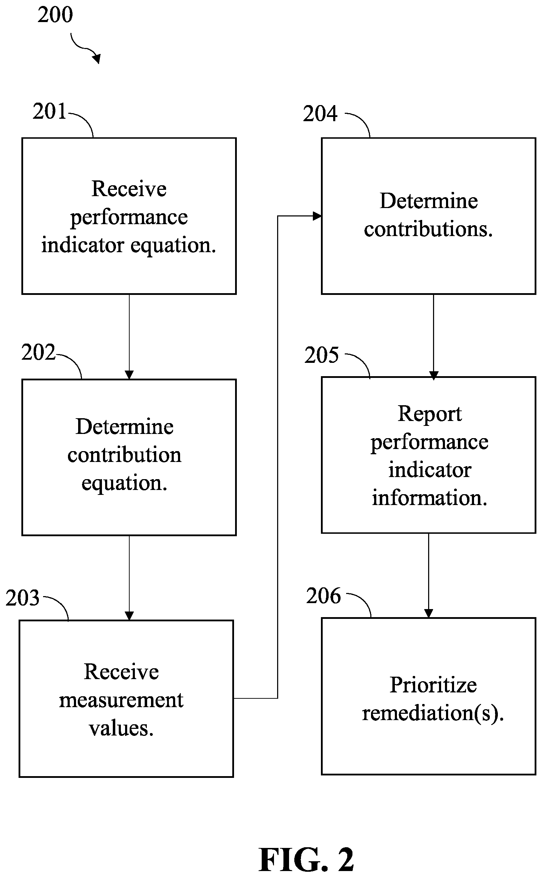

As shown in FIG. 1, in addition to including databases 105-1 and 105-2 storing measurement values, operator systems 107-1 and 107-2 may also include sets of servers 104-1 and 104-2. In some cases, these sets of servers 104-1 or 104-2 may be used to process the information in the operator systems' respective databases 105-1 or 105-2. For example, in a system implemented using the architecture of FIG. 1, the server(s) 104-1 of an operator system 107-1 associated with a first RAN 101-1 may use measurement values for the nodes 103-1 to 103-5 of that RAN 101-1 to calculate performance indicators such as the RAN's availability or accessibility. The operator systems' server(s) 104-1 and 104-2 may also interact with an external server 106 to provide additional information which may be used by the network operators to optimize their RANs. For example, an external server 106 may process the equation a network operator uses to calculate a performance indicator to determine how to calculate the contributions of each node from that operator's RAN(s). Those contributions may then be used to prioritize and implement remediation activities on the relevant nodes, either by the network operators themselves, by the operator of the external server 106, or both. FIGs. 2-10 and the associated text provide additional detail on, as well as concrete examples of, how these types of activities may be performed.

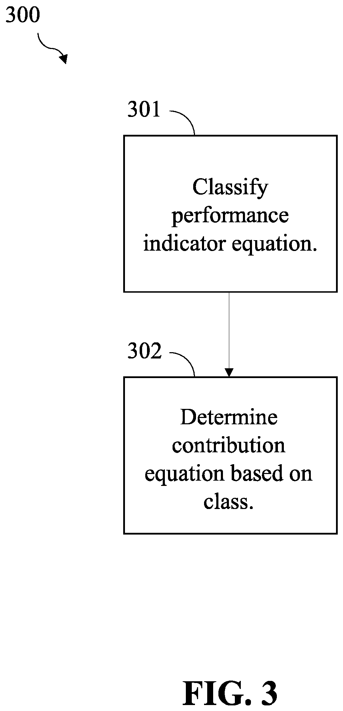

Turning now to FIG. 2, that figure depicts a high level method 200 for analyzing the operation of a node cluster with respect to a performance indicator based on the contributions of individual nodes to the cluster as a whole. As shown in block 201, this analysis may begin with receiving the equation used to define the performance indicator in question. This may be done in a variety of ways. To illustrate, consider an implementation following the architecture 100 of FIG. 1 in which a first operator system 107-1 was configured to interact with a server 106 to determine contributions of individual nodes in the operator system's RAN 101-1. In this type of scenario, the server 106 may expose an application programming interface (API) that could allow the operator system 107-1 (e.g., via its set of servers 104-1) to submit the equation used to define the performance indicator. In such a case, the server 106 would receive the equation as shown in block 201 when the operator system 107-1 passed the equation to the server 106 via the API. However, this is not the exclusive way to implement receiving performance indicator equation (block 201), and other approaches may also be used. For example, in some cases, rather than providing a single API, a server 106 may provide a set of APIs, and an operator system 107-1 may pass different performance indicator equations to different APIs (e.g., based on a performance indicator classification such as described below in the context of FIG. 3). As another alternative, there may be a setup process in which the performance equations used by the operator system 107-1 would be provided to a server 106, in which case the server 106 would receive the performance indicator equation (block 201) during the setup process, and the operator system 107-1 would not necessarily provide it as part of a subsequent request. Further variations (e.g., combinations in which a server 106 may receive an equation (block 201) through a setup process, but also may expose an API which could receive an equation) are also possible, will be immediately apparent to, and could be implemented without undue experimentation by, one of ordinary skill in the art. Accordingly, the above examples of how receiving an equation (block 201) may be achieved should be understood as being illustrative only, and should not be treated as limiting.

Continuing with the discussion of FIG. 2, after receiving a performance indicator equation in block 201, the method may continue with using that performance indicator equation to determine a contribution equation in block 202. To illustrate how this type of determination may be performed, consider FIG. 3, which depicts a method 300 which begins with classifying (block 301) the performance indicator equation. This classification (block 301) may allow an individual node's contribution to overall cluster performance to be calculated differently depending on how the performance indicator equation used its underlying measurement parameters in defining the performance indicator in question. For example, if the performance indicator was a rate defined by an equation of the form "PI = successes/attempts", then the contributions of the individual nodes may be reflected in their number of events leading to deviation from optimal performance (e.g., failures), which could be obtained using the contribution equation "contribution = attempts - successes". However, if the performance indicator was a weighted average defined by an equation of the form "PI = (weight₁ * parameter₁ + weight₂ * parameter₂ + ... + weightₙ * parameterₙ)/n" the determining a contribution equation for a number of failures might not be appropriate, and, instead, the contribution equation may be simply defined as the sum of the performance indicator equation's raw parameters - i.e., "F = parameter₁ + parameter₂ + ... + parameterₙ".

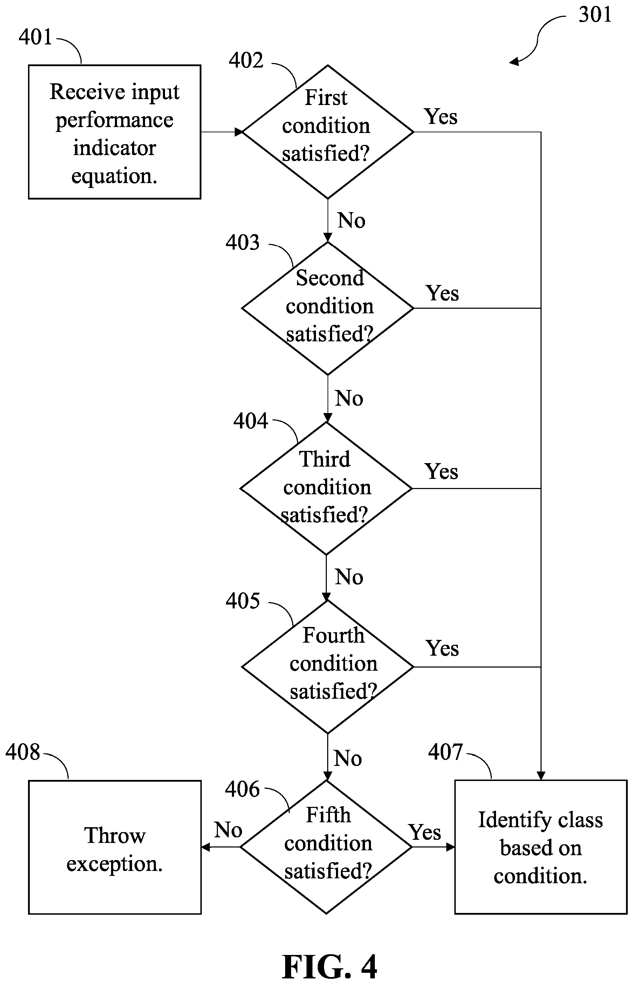

In practice, to perform a classification such as shown in block 301 of FIG. 3, a module may be implemented to place an input performance indicator equation into one of a set of predefined classes. An example of a method which may be performed by such a module is provide in FIG. 4, which illustrates how a performance indicator equation could be classified into one of a predefined set of five classes. In that method, the module would initially receive (block 401) input in the form of a performance indicator equation. It would then determine if that performance indicator equation satisfied a condition defining one of its predefined classes (blocks 402-406). Examples of these types of conditions, as well as exemplary performance indicator equations corresponding to those conditions, are provided below in table 1.

**Table 1: Exemplary performance indicator equation classification conditions.**

| | **Condition for Classification** | **Example** |
|---|---|---|
| 1) | Performance indicator equation is a weighted average of measurement values for a set of measurement parameters. | PI = (W₁₋₁*M₁₋₁ + W₁₋₂*M₁₋₂+ ... + W₁₋ₙ*M₁₋ₙ)/n |
| | | NOTE: in the above example, n is the number of parameters in the weighted average, and W₁₋₁ to W₁₋ₙ are the weights. |
| 2) | Performance indicator equation directly reflects a measurement value for a measurement parameter without averaging or division. | PI = M₂₋₁ |
| 3) | Performance indicator equation includes only one division calculation, and that calculation has measurement value(s) for measurement parameter(s) in both the numerator and denominator. | PI = M₃₋₁ / M₃₋₂ |
| 4) | Performance indicator equation includes only one division calculation, and that calculation has measurement value(s) for measurement parameter(s) in the numerator or denominator, but not both. | PI = C₄₋₁ - ((M₄₋₁ + M₄₋₂)/C₄₋₂) |
| | | NOTE: in the above example, C₄₋₁ and C₄₋₂ are constants which may or may not have the same value. |
| 5) | Performance indicator equation which includes more than one division calculation with measurement value(s) for measurement parameter(s) in the numerator, the denominator, or both. | PI = M₅₋₁/(M₅₋₂ - M₅₋₃) * (M₅₋₄/M₅₋₅) * (M₅₋₆/M₅₋₇) |

Once it had been determined that an input performance indicator equation matched a condition corresponding to one of the predefined classes, a module performing the method of FIG. 4 could identify the class for the equation based on the condition that was satisfied (block 407). For example, if the equation was determined to match the condition for class 4, then it could be identified as being in class 4. Alternatively, if the equation did not match any of the conditions for one of the module's predefined classes then, in block 408, the module may throw an exception, such as may subsequently be used by the individual(s) responsible for the module to add additional classes or modify the conditions for the existing classes. In this way, a method such as shown in FIG. 4 may both classify equations which match one of a set of predefined classes, and may also provide a mechanism (i.e., throwing exceptions) which may be used to expand or modify the set of predefined classes if and as needed.

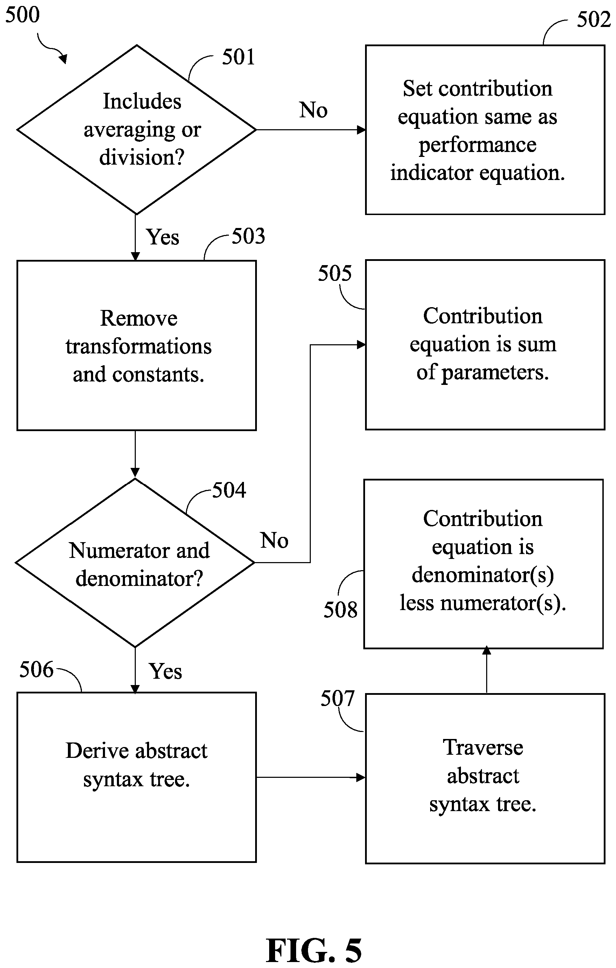

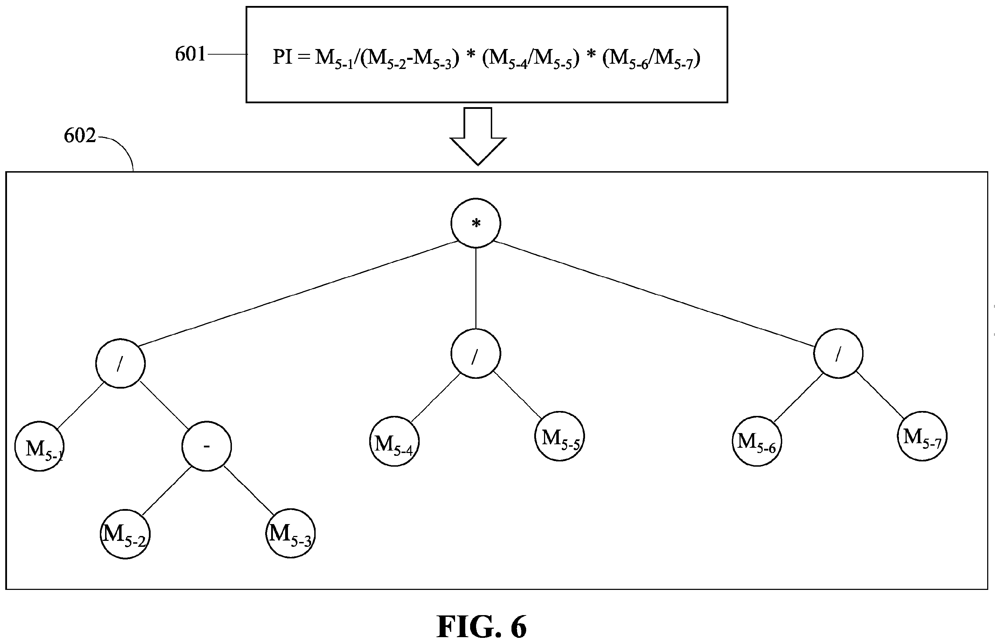

Continuing with the discussion of FIG. 3, after a performance indicator equation had been classified in block 301 (e.g., using a module configured to perform a method such as described in the context of FIG. 4), that classification could be used to determine a contribution equation in block 302. An example of a method 500 which may be used to determine a contribution equation based on the classes set forth in table 1 is provided in FIG. 5. In the method of FIG. 5, initially, a determination 501 would be made of whether the input performance indicator equation included averaging or division - i.e., whether it was classified in class 4 from table 1. If the performance indicator equation did not include averaging or division - i.e., it was classified in class 4 - then the contribution equation would be set in block 502 as the same as the performance indicator equation. Alternatively, if the performance indicator equation was not classified in class 4, then it may be reduced to its raw parameters and their relationships in by removing any transformations or constant values in block 503. For example, if the performance indicator equation was "PI = log10(C₁₋₁ * (W₁₋₁ * M₁₋₁ + W₁₋₂ * M₁₋₂ + ... + W₁₋ₙ * M₁₋ₙ)/n)," block 503 may be implemented by removing the transformation (i.e., the logarithmic operation) and the constant values (i.e., n, C₁₋₁ and W₁₋₁ to W₁₋ₙ). A further determination 504 may then be performed to determine if the performance indicator equation still had both a numerator and denominator - i.e., that it was included in class 3 or class 5 from table 1. If the performance indicator equation did not include both a numerator and a denominator after being reduced to raw measurement parameters - i.e., if it was in either class 1 or class 4 - then the contribution equation may be set as the sum of the measurement parameters in block 505. Alternatively, if the performance indicator equation included both a numerator and denominator after being reduced to its raw measurement parameters - i.e., if it was in either class 3 or class 5 - then the performance indicator equation may be decomposed in block 506 by parsing it into an abstract syntax tree (AST). An example of this type of transformation is provided in FIG. 6, which illustrates how an input performance indicator equation 601 from class 5 of table 1 could be represented as an AST 602. Such an AST may be traversed in block 507 to identify the numerators and denominators from the performance indicator equation. The contribution equation could then be defined by setting it as equal to the sum of the denominators minus the numerators in block 508.

To further illustrate how contribution equations may be determined based on classifications as shown in table 1, table 2, below, illustrates how contribution equations could be determined on a class by class basis, and also provides an example of a performance indicator equation and a corresponding contribution equation for each class.

**Table 2: Exemplary class based approach to determining a contribution equation.**

| **Class** | **Approach** | **Example** |
|---|---|---|
| 1) | Set contribution equation as equal to the sum of raw measurement parameters from performance indicator equation. | PI = log10(C₁₋₁ * (W₁₋₁ * M₁₋₁ + W₁₋₂ * M₁₋₂ + ... + W₁₋ₙ * M₁₋ₙ)/n) → F = M₁₋₁ + M₁₋₂ + ... + M₁₋ₙ |
| 2) | Set contribution equation as the same as the performance indicator equation. | PI = M₂₋₁ → F = M₂₋₁ |
| 3) | Set contribution equation equal to denominator less numerator after removing constants and transformations. | PI = C₃₋₁ * (M₃₋ₐ - M_{3-b})/M_{3-c} → F = (M₃₋ₐ - M_{3-b}) - M_{3-c} |
| 4) | Set contribution equation equal to sum of raw measurement parameters from performance indicator equation. | PI = C₄₋₁ - ((M₄₋₁ + M₄₋₂)/C₄₋₂) → F = M₄₋₁ + M₄₋₂ |
| 5) | Set contribution equation equal to sum of differences between raw measurement parameters in numerators and denominators in performance indicator equation. | PI = M₅₋₁/(M₅₋₂ - M₅₋₃) * (M₅₋₄/M₅₋₅) * (M₅₋₆/M₅₋₇) → F = ((M₅₋₂ - M₅₋₃) - M₅₋₁) + (M₅₋₅ - M₅₋₄) + (M₅₋₇ - M₅₋₆) |

Other approaches will be immediately apparent to, and could be implemented without undue experimentation by, one of ordinary skill in the art in light of this disclosure, and so the exemplary approaches described above for determining a contribution equation should be understood as being illustrative only, and should not be treated as limiting on the protection provided by or any related document.

Returning to the overall method of FIG. 2, after determining the contribution equation in block 202, the method continues in block 203 with receiving measurement values for the measurement parameters used in the contribution equation. As with the other acts illustrated in FIG. 2, this may be achieved in a variety of ways. As one example, consider the scenario in which an operator system 107-1 passes an equation for a performance indicator to an API exposed by a server 106. In this type of scenario, in addition to passing in the equation, the operator system 107-1 may also use the API to submit measurement values for a time period during which a concerning trend was observed in the performance indicator. Thus, one way of receiving measurement values (block 203) may be for a server 106 to receive them through an API. As another example, consider a scenario in which communications between an operator system 107-1 and a server 106 are facilitated through a setup process. In this type of scenario, the setup process may include software being installed on the operator system's set of servers 104-1 which would allow the server 106 to run queries against the operator system's database 105-1. When this approach is used, the server 106 may receive measurement values (block 203) by running a query against the database 105-1 requesting values for the relevant measurement parameters. Further variations (e.g., an implementation in which an operator system would submit an API request along with a link to a temporary location from which measurement values could be downloaded, passing measurement values to software running on an operator system, etc.) are also possible, will be immediately apparent to, and could be implemented without undue experimentation by, one of ordinary skill in the art. Accordingly, the above examples of how receiving measurement values (block 203) may be achieved should be understood as being illustrative only, and should not be treated as limiting.

Once the measurement values had been received (block 203), those measurement values may be used to determine contributions of individual nodes in block 204. To illustrate this contribution determination, consider a case where a system such as a first radio access network 101-1 was found to have a performance indicator with a success rate of 90%, while two of that system's nodes were each found to have a success rate for that performance indicator of 80%. If there was a desire to improve the value of that performance indicator (e.g., because a value of 90% was within a preconfigured distance of a threshold used to measure service failures), simply knowing that two nodes had values of 80% may not be sufficient to appropriately allocate resources for improving the performance of the network overall. For example, if a first node 103-1 had 20 failures and 80 successes, while a second node 103-2 had 1000 failures and 4000 successes, both nodes would have a success rate of 80%. However, the second node 103-2 would clearly make a greater contribution to the overall success rate for the network, and so, all else being equal, a remediation focusing on the second node 103-2 would be expected to have a greater impact than a remediation focusing on the first node 103-1. Accordingly, to account for this, a method such as shown in FIG. 2 may assign each of the nodes a weight value corresponding to the impact of that node on the overall cluster's performance. For example, if the total number of failures for all of the nodes in the RAN from the above illustration was 10,000, then the first node may be assigned a weight of 0.2% (i.e., 20 failures for the first node divided by the total number of failures for all nodes in the RAN), while the second node may be assigned a weight of 10% (i.e., 1,000 failures divided by the total number of failures for all nodes in the RAN).

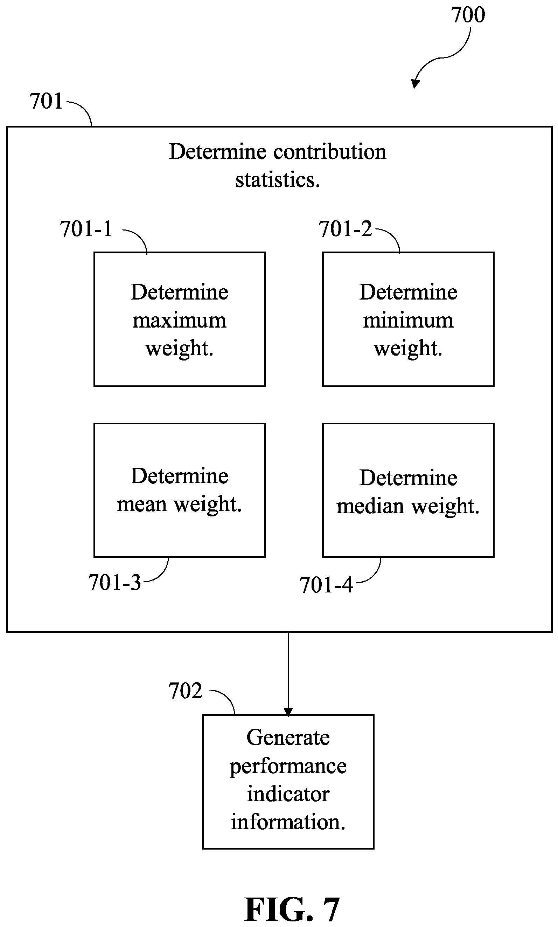

In the method of FIG. 2, once the contributions of individual nodes had been determined (block 204), those contributions may be used in block 205 to report information on the performance indicator in question. To illustrate how this may take place, consider FIG. 7, which illustrates a method 700 in which performance indicator information such as could be reported in block 205 is generated based on analysis of the variability of weights within a cluster's nodes. Initially, in block 701, multiple types of contribution statistics are determined, including the maximum weight of any of the cluster's nodes (701-1), the minimum weight of any of the cluster's nodes (block 701-2), the mean weight of any of the cluster's nodes (block 701-3), and the median weight of any of the cluster's nodes (block 701-4). Other types of statistics, such as the weights at the 25^{th} and 75^{th} percentile, and/or the standard deviation of the weights may also (or alternatively) be calculated as part of the contribution statistics determination (block 701). These statistics may then be used to generate the performance indicator information in block 702, such as by generating a report that could be presented to a user. This may include generating a report with both the statistics as well as the number of nodes whose performance those statistics represent. Such a report may also include, or statistics such as calculated in the method 700 of FIG. 7 may be used to generate, insights into the operation of the cluster. For example, if there is a large spread between minimum and maximum weight values, this may be treated as indicating that a drop in a performance indicator was the result of a localized failure, while if the minimum and maximum values are closer it may indicate that the cluster is experiencing a more widely distributed failure. Similarly, both the maximum and minimum values may be treated as indicating nodes that may require additional action. For example, the node with the maximum weight may be treated as a node which is currently experiencing a failure and in need of remediation, while the node with the minimum weight may be identified as a node which, while not needing remediation, may benefit from investigation (e.g., to determine if its low weight was the result of proper operation, or instead reflected a failure in data collection or node utilization).

Once the performance indicator information had been generated (block 702), it may then be reported as shown in block 205. This may be done by the server 106 transmitting the information in the form of a report to the operator system 107-1, where it could be displayed to operator personnel who could use it for purposes such as prioritizing remediations (block 206) among a cluster's nodes. In some cases, a report may also be provided with additional information, or with functionality allowing a user to access additional information, that would make the report more useful. For example, in addition to providing descriptive statistics such as described above, a report may also provide identifications of nodes which are most relevant to such statistics (e.g., the nodes with the maximum and minimum contributions to the performance indicator in question), or a link to an additional interface where such nodes could be identified. As another example, in some cases there may be location or other metadata available regarding the nodes in question which could be used to provide visualizations for a user, such as a map with locations of significant nodes (e.g., nodes whose contributions were greater than the 75^{th} percentile). Performance indicator information may also be reported (block 205) in a form which provides data for more than a single performance indicator. For example, consider a scenario in which ten performance indicators were used to quantify a cluster's performance. In this type of scenario, performance indicator information may be reported (block 205) by providing a table with descriptive statistics (e.g., mean, maximum and minimum contributions) for each of the performance indicators, thereby providing a tool for a user to obtain a more holistic understanding of the cluster. Other approaches to reporting performance indicator information (block 205) will be immediately apparent to, and could be implemented without undue experimentation by, one of ordinary skill in the art in light of this disclosure. Accordingly, the above examples provided for how performance indicator information may be reported, like the discussion of the other acts illustrated in FIGS. 2-5 and 7, should be understood as being illustrative only, and should not be treated as limiting.

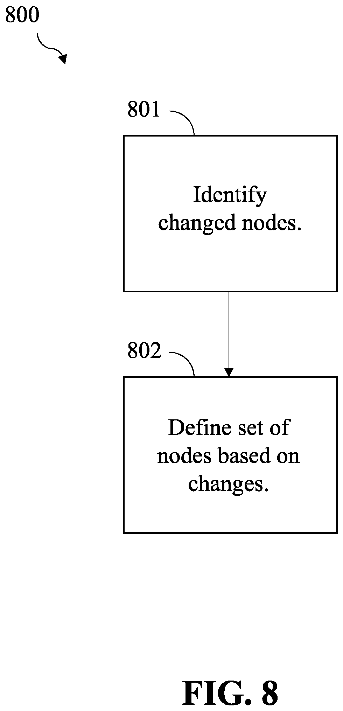

Additional benefits and/or optimizations may also be included in some implementations. For example, consider FIG. 8, which illustrates a method 800 which may be integrated into performance of a method such as shown in FIG. 2 to focus the analysis of FIG. 2 on those nodes which are most likely to be significant to a cluster's operation. To illustrate how this type of focusing may be useful, consider a case in which the disclosed technology was deployed to support the operation of one or more radio access networks 101-1 to 101-3 as shown in FIG. 1. In such a case, the nodes 103-1 to 103-15 may each be management elements, and the measurement values may be values captured for each management element during its real time operation. In this type of scenario, the measurement values for the management elements of even one radio access network could be a massive amount of data. Accordingly, a method 800 such as shown in FIG. 8 may help reduce the amount of data to be processed, which, in turn, may allow for increases in the sophistication and responsiveness of the processing which is actually performed.

In the data focusing method of FIG. 8, initially a set of nodes which had undergone a change would be identified in block 801. This may be done, for example, by considering all of the nodes in a cluster (e.g., all of the management elements in a radio access network), identifying the most recent software update that had been deployed to any of those nodes, and then identifying which of those nodes had been subject to the update. This information may then be used in block 802 to define the set of nodes for which data would be retrieved and whose individual contributions would be evaluated. In testing this was found to reduce the number of management elements for which data was retrieved when applying the disclosed technology to a radio access network by over 27%, thereby significantly reducing the difficulty of both retrieving and subsequently processing that data. Variations on this type of approach may also be utilized in some situations. For example, while the above description mentioned identifying changed nodes (block 801) based on software changes, it is possible that other types of changes may also, or alternatively, be considered, such as hardware changes (e.g., replacement of a management element or a component thereof with a new physical device or component) or network changes (e.g., adding a new node, or changing how nodes are connected to each other within a RAN).

To illustrate how a data focusing method 800 such as shown in FIG. 8 may be integrated into analysis such as shown in FIG. 2, consider a case where a network operator used an API exposed by a server 106 to initiate performance of a method such as shown in FIG. 2 in response to an observed negative trend. In such a case, the network operator may, in addition to providing the relevant performance indicator equation, provide a date indicating the beginning of the trend, and the server 106 may identify changed nodes (block 801) based on the most recent change prior to the beginning of the trend, even if there were subsequent changes that may have happened after the trend first started. As another alternative, in some cases a network operator may itself identify the nodes to consider prior to initiating performance of a process such as shown in FIG. 2 and the process of FIG. 2 may simply be performed with the data for all of those previously identified nodes. For example, a network operator may set a policy that a process such as shown in FIG. 2 should be performed any time there was a change (e.g., a hardware, software or network change) to the nodes in its network, and so, rather than requesting that an external server 106 identify nodes, may provide the external server with a list of nodes to be considered (e.g., the nodes impacted by the change, or all nodes in the network). Other variations are also possible, will be immediately apparent to, and could be implemented without undue experimentation by, one of ordinary skill in the art in light of this disclosure. Accordingly, the above discussion of node identification and potential integrations of the methods of FIGS. 2 and 8 should be understood as being illustrative only, and should not be treated as limiting.

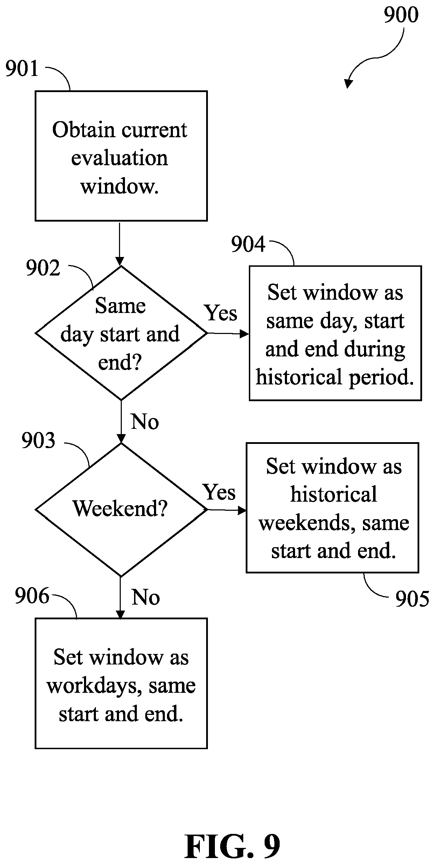

As another example of an additional type of feature which may be included in some implementations, consider the possibility of supplementing analysis and reporting such as described previously with inter-period or trend information. As an illustration of steps which may be performed to support this type of functionality, FIG. 9 depicts a method 900 for determining a historical evaluation window which may be used to gather data for intertemporal analysis. As shown in FIG. 9, a method 900 for determining a historical evaluation window may begin with obtaining a current evaluation window, as shown in block 901. This may be done, for example, by an operator system 107-1 making a call to an API exposed by a server 106 which allows the operator system to specify the current evaluation window. In such a case, a server 106 could obtain (block 901) the current evaluation window simply by receiving it through the API, potentially in combination with other information relevant to the analysis to be performed, such as a performance indicator equation for a performance indicator where a downward trend had been observed. Alternatively, in some cases, rather than exposing an API which allowed for specification of a current evaluation window, a server 106 may only expose an API which allowed submission of some other information (e.g., a performance indicator equation, or a set of nodes to consider), and the current evaluation window may be obtained (block 901) by the server 106 treating a call to the API as a request for real time analysis, and so defining the current evaluation window as a predefined period (e.g., 15 minutes) preceding the API call. Additional variations (e.g., combinations, in which an API is exposed which treats the current evaluation window as an optional parameter and the current evaluation window is defined differently based on whether it is provided via the API) are also possible and will be immediately apparent to those of ordinary skill in the art in light of this disclosure, and so the above description of examples for how a current evaluation window may be obtained (block 901) should be understood as being illustrative only, and should not be treated as limiting.

In the method 900 of FIG. 9, after the current evaluation window is obtained in block 901, a determination is made in block 902 of whether the current evaluation window begins and ends on a single day. If it does, then the method 900 continues in block 904 by setting the historical evaluation as beginning and ending at the same time of one or more instances of the same day over a historical period. For example, if the current evaluation window is from 3:00 pm to 6:30 pm on a Wednesday, and the historical period is three weeks, then the historical evaluation window may be set in block 904 as 3:00 pm to 6:30 pm on each of the three Wednesdays preceding the current evaluation window. Alternatively, if the current evaluation window does not start and end on a single day, a second determination may be made in block 903 of whether the start and end times for the current evaluation window take place during a weekend (i.e., on a Saturday or Sunday). If so, then in block 905 the historical window is defined as weekend days with the same start and end times during the historical period. For example, if the current evaluation window starts at 10:00 pm on a Saturday and ends at 2:00 am on a Sunday, the historical window may be defined as 10:00 pm Saturday through 2:00 am Sunday for each of the three weekends preceding the current evaluation window. Finally, if the current evaluation window does not start and end on the same day and does not start and end on a weekend, then the method of FIG. 9 would define the historical evaluation window in block 906 as workdays with the same start and end as the current evaluation window. For example, if the current evaluation window starts at 10:00 pm on a Tuesday and ends on 2:00 am on a Wednesday, the historical evaluation window may be defined (block 606) as 10:00 pm Monday to 2:00 am Tuesday, 10:00 pm Tuesday through 2:00 am Wednesday, 10:00 pm Wednesday through 2:00 am Thursday, and 10:00 pm Thursday through 2:00 am Friday for each of the three weeks preceding the current evaluation period.

Variations on the above-described exemplary approaches to defining a historical evaluation window are also possible, and will be immediately apparent to one or ordinary skill in light of this disclosure. For example, in some cases, when a current evaluation window does not start and end on the same day, the historical evaluation window may be defined as including partial portions of the period matching the current evaluation window, but truncated to remain on the weekend or work week as appropriate. To illustrate, consider the example above of a current evaluation window which begins on 10:00 pm on a Saturday and ends at 2:00 am on a Sunday. In some cases, in addition to including the period from 10:00 pm Saturday to 2:00 am Sunday on the preceding weekends during the historical period, the historical evaluation window may be defined (block 905) as also including the period from 12:00 am to 2:00 am Saturday (i.e., the same four hour window, except ending instead starting on Saturday and having the period from 10:00 pm to 11:59 pm Friday removed) and the period from 10:00 pm to 11:59 pm Sunday (i.e., the same four hour window, except starting instead ending on Sunday and having the period from 12:00 am to 2:00 am Monday removed) for each of the preceding weekends during the historical period. Similarly, in some cases, when a current evaluation window is from 10:00 pm Tuesday to 2:00 am Wednesday, the historical evaluation window may be defined in block 906 as including the period from 12:00 am to 2:00 am Monday and from 10:00 pm to 11:59 pm Friday for each preceding Monday and Friday in the historical period. Other variations are also possible, such as having a different historical period than the three week period from the examples above, or identifying current evaluation windows which start on a weekend and end on a work day (or vice versa) and defining the historical evaluation window for those periods as beginning on the same day and time and ending on the same day and time for each preceding week during the historical period. Accordingly, the particular examples given above should be understood as being illustrative only, and should not be treated as implying limitations on the protection provided by this document or any other document claiming the benefit of this disclosure.

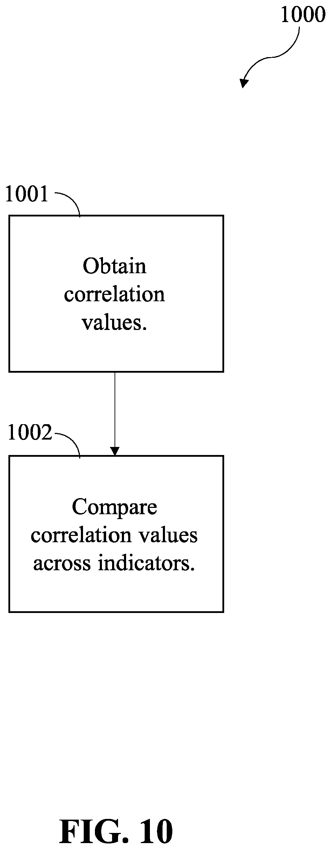

However, they are determined, the definition of, and retrieval of measurement values for, a historical evaluation window may allow for intertemporal analysis to be provided as part of reporting (block 205) performance indicator information. To illustrate this type of intertemporal analysis, consider FIG. 10, which depicts a method 1000 which may be used to provide insights based on intertemporal correlations between node contributions. In such a method 1000, after current and historical contributions for each node to a plurality of performance indicators had been determined (e.g., using approaches described previously in the context of blocks 201 to 204), correlations between the contributions of each node for each performance indicator in the historical and current evaluation windows could be calculated in block 1001. These correlations could then be compared in block 1002 to provide a measure of system stability for each of the indicators across historical period to the present. To illustrate, consider a case where the contributions of individual nodes to a first performance indicator were very similar across time periods while the contributions of individual nodes to a second performance indicator changed significantly across time periods. In this type of scenario, the contributions of the nodes to the first performance indicator could be expected to have a relatively higher correlation value than those for the second performance indicator (e.g., 99% versus 49%). Accordingly, comparing those correlation values could reveal that the cluster was less stable with respect to the second performance indicator than the first performance indicator. This, in turn, could trigger further actions, such as root cause analysis for whether the changes with respect to the second performance indicator reflected an underlying issue requiring remediation. For example, if there had been a remedial action on the second performance indicator between the current and historical evaluation windows, and the second performance indicator had improved between the current and historical windows, then the instability may be treated as an innocuous result of the remedial action on previously lower performing nodes. Alternatively, if the second performance indicator had worsened between evaluation windows, then a further investigation could be initiated to identify a cause and potential remediations (e.g., were poorly performing nodes for the second performance indicator geographically localized such that they may have been damaged by a weather event and require physical repair or replacement). This type of information may then be reported, such as using approaches described previously in the context of block 205 from FIG. 2.

It should be understood that, while the above discussion of FIG. 10 described how the disclosed technology may be utilized for intertemporal analysis, that description is intended to be illustrative only, as the disclosed technology may be applied to other types of intertemporal analysis as well. For example, in some cases, rather than correlating contributions across time periods, intertemporal analysis may comprise providing a list of nodes in a cluster and indicating whether their contributions to a performance indicator had increased, decreased or stayed the same from one period to the next. Similarly, in some cases intertemporal analysis such as described in the context of FIG. 10 may be combined with other types of statistical analysis such as described in the context of FIG. 7. For example, in some cases performance indicator information generated (block 702) in a method as shown in FIG. 7 may include performance indicator information (e.g., maximum and minimum contributions, etc.) for both a current and historical evaluation window rather than only including current information. As another example, while FIG. 8 illustrated a method 800 in which changes are used to identify nodes that would be analyzed, in some implementations the analysis of nodes may be used to identify the significance of changes. To illustrate, consider a case where a cluster had undergone a series of changes (e.g., a software update, deployment of new hardware, and a modification of connections between nodes) over a historical time period (e.g., 3 weeks). In such a case, an intertemporal analysis may be performed in which the contributions of the cluster's nodes were tracked over the historical period, and reported based on the periods following each change. In this way, changes in the performance of the cluster could be directly associated with each change, and potential remediations (e.g., reversing a software update for certain nodes if it appeared that that update actually damaged those nodes' performance) could be easily identified and understood by a user. Other variations, combinations and modifications are also possible, will be immediately apparent to, and could be implemented without undue experimentation by, one of ordinary skill in the art in light of this disclosure. Accordingly, the exemplary variations described above, like the description of intertemporal analysis provided in the context of FIG. 10, should be understood as being illustrative only, and should not be treated as limiting.

Variations are also possible on the order or instrumentalities used for performing acts such as described herein. For instance, the description of FIG. 2 included various examples of how an external server could receive (block 201) a performance indicator equation. However, it should be understood that in a method such as shown in FIG. 2 the performance indicator equation may not need to be received by (or exclusively by) a server external to an operator system. For example, in some cases a set of servers 104-1 at an operator system 107-1 may be configured with software which would process a performance indicator equation, such as by classifying it in a case where an external server provided different API's for different classes of performance indicator equation. In such a case, the software running on the servers 104-1 of the operator system 107-1 may be treated as receiving (block 201) the performance indicator equation when it is provided for classification. As another example, consider the sequence in which receiving measurement values (block 203) may be completed in a method performed based on this disclosure. In FIG. 2, receiving measurement values (block 203) is illustrated as following determining a contribution equation (block 202). However, it is entirely possible that the measurement values may be received (block 203) either prior to, or simultaneously with, determining the contribution equation (block 202), such as in an implementation where server 106 queries a database for measurement values of the parameters in a performance indicator equation immediately when a request is received. In such a case, the determination of a contribution equation (block 202) may be performed in parallel while the measurement values were being retrieved, thereby potentially increasing the overall throughput of the system. Accordingly, the above description of how various entities may perform various actions, or of a sequence in which various actions may be performed, should be understood as being illustrative only, and should not be treated as requiring any disclosed action to be performed in any particular sequence or by any particular entity.

Aspects of the disclosed technology may also be applied in a variety of use cases. For example, the disclosed technology may be used to target remediations in the event a performance anomaly is detected. However, it may also be used for performance monitoring even in the absence of an anomaly, such as by providing a dashboard (e.g., populated with performance indicator information such as may be reported in block 205 of FIG. 2, intertemporal information such as described in the context of FIG. 10, etc.) through which an operator could have continuous visibility into network operation. Similarly, the disclosed technology may be used to identify a remediation (e.g., identifying a node requiring an update or repair based on it having a disproportionate contribution to an observed performance indicator deviation). However, it may also be used to provide explanations for remediations suggested by another system. For example, in a case where the servers 104-1 on an operator system 107-1 host an artificial intelligence (AI) process which identifies and suggests an action to remediate an anomaly, those servers may interact with an external server 106 utilize the disclosed technology to provide an explanation for the recommendation of the AI process. In such a case, the set of servers 104-1 may provide the measurement data, a list of nodes in the relevant cluster, the formula(s) for the performance indicator(s) where the AI process identified an anomaly, and the output of the AI process itself, and the external server may analyze the contributions of the various nodes to identify factors which separate the nodes impacted by the AI process' suggested remediation from the others (e.g., those nodes have the highest weights of any nodes in the cluster, those nodes have weights which are trending upward, etc.). In this way, the disclosed technology may be used to essentially transform any artificial intelligence system into an explainable artificial intelligence system without requiring the underlying artificial intelligence system to be modified or replaced by its operator. Other applications of the disclosed technology (e.g., using system stability as measured by intertemporal correlations of the contributions of nodes to the performance of a cluster as a trigger for validating the behavior of newly installed infrastructure before putting it into productions) are also possible and will be immediately apparent to those of ordinary skill in the art. Accordingly, the exemplary uses and applications provided herein should be understood as being illustrative only, and should not be treated as limiting.

Based on the foregoing detailed description, it should be appreciated that embodiments of the present disclosure provide methods, systems and computer program products for multi-node analysis. Such multi-node analysis may be applied to detect performance drops in given clusters, narrowing down clusters based on changes such as software changes, hardware changes, or network changes. This may support analysis of current and historical events. Additionally, the identification of changes such as described may also be used for license and asset management, such as providing an inventory of nodes (e.g., management elements) and software installed thereon. Multi-node analysis as described herein may also support localizing and discovering area(s) of performance degradation in a given cluster, characterizing if an issue is local or spread across the enter cluster. In turn, this may decrease time and effort needed to reconstruct and quickly detect issues. Multi-node analysis as described herein can also allow targeted and preventive fixes when performance is degraded. For example, a node with high failure contributions in the cluster may be checked as a priority. Further, a priority fix approach is provided by the disclosed technology, as it provides evidence for and insight into network performance. This, in turn, provides a better experience for users of a network. The disclosed multi-node analysis technology may also provide a new level of automation and adaptiveness, and may provide improved efficiency in evaluating periodic or stochastic network issues with deep inspection of node level contributions to performance indicator metrics. The disclosed technology may also be fully scalable, being applied to the core network, transport network, interconnect network, and/or on multiple network layers rather than simply being applied to RANs. Similarly, the disclosed technology could be applied in a cloud-based deployment to any system in which performance indicator metrics are used for monitoring and anomaly detection. Multi-node analysis as described herein may also be used as a baseline for explainable artificial intelligence, providing attributive or causal explanations for outputs of other artificial intelligence systems. The disclosed technology may also be used to evaluate slicing on tenants or on deployed 5G networks. This may allow a service or application provider to monitor performance of slices over various wireless networks. Additionally, components of the disclosed multi-node analysis technology may be deployed as slaves in a fully automated implementation to provide preventive and priority fixes and avoid service disruption.

In the above-description of various embodiments of the present disclosure, it is to be understood that the terminology used herein is for the purpose of describing particular embodiments only and is not intended to be limiting on the scope of protection provided by this or any related document. Unless otherwise defined, all terms (including technical and scientific terms) used herein have the same meaning as commonly understood by one of ordinary skill in the art to which this invention belongs as shown by a general purpose dictionary.

At least some example embodiments are described herein with reference to block diagrams and/or flowchart illustrations of computer-implemented methods, apparatus (systems and/or devices) and/or computer software. It is understood that a block of the block diagrams and/or flowchart illustrations, and combinations of blocks in the block diagrams and/or flowchart illustrations, can be implemented by computer program instructions that are performed by one or more computer circuits. Such computer program instructions may be provided to a processor circuit of a general purpose computer circuit, special purpose computer circuit, and/or other programmable data processing circuit to produce a machine, so that the instructions, which execute via the processor of the computer and/or other programmable data processing apparatus, transform and control transistors, values stored in memory locations, and other hardware components within such circuitry to implement the functions/acts specified in the block diagrams and/or flowchart block or blocks, and thereby create means (functionality) and/or structure for implementing the functions/acts specified in the block diagrams and/or flowchart block(s). Additionally, the computer program instructions may also be stored in a tangible computer-readable medium that can direct a computer or other programmable data processing apparatus to function in a particular manner, such that the instructions stored in the computer-readable medium produce an article of manufacture including instructions which implement the functions/acts specified in the block diagrams and/or flowchart block or blocks.

As alluded to previously, tangible, non-transitory computer-readable medium may include an electronic, magnetic, optical, electromagnetic, or semiconductor data storage system, apparatus, or device. More specific examples of the computer-readable medium would include the following: a portable computer diskette, a random access memory (RAM) circuit, a read-only memory (ROM) circuit, an erasable programmable read-only memory (EPROM or Flash memory) circuit, a portable compact disc read-only memory (CD-ROM), and a portable digital video disc read-only memory (DVD/Blu-ray). The computer program instructions may also be loaded onto or otherwise downloaded to a computer and/or other programmable data processing apparatus to cause a series of operational steps to be performed on the computer and/or other programmable apparatus to produce a computer-implemented process such that the instructions which execute on the computer or other programmable apparatus provide steps for implementing the functions/acts specified in the block diagrams and/or flowchart block or blocks. Accordingly, embodiments of the present invention may be embodied in hardware and/or in software (including firmware, resident software micro-code, etc.) that runs on a processor such as a digital signal processor, which may collectively be referred to as "circuitry," "a module" or variants thereof.

Further, in at least some additional or alternative implementations, the functions/acts described in the blocks may occur out of the order shown in the flowcharts. For example, two blocks shown in succession may in fact be executed substantially concurrently or the blocks may sometimes be executed in the reverse order, depending upon the functionality/acts involved Moreover, the functionality of a given block of the flowcharts and/or block diagrams may be separated into multiple blocks and/or the functionality of two or more blocks of the flowcharts and/or block diagrams may be at least partially integrated. Finally, other blocks may be added/inserted between the blocks that are illustrated and blocks from different flowcharts may be combined, rearranged, and/or reconfigured into additional flowcharts in any combination or subcombination. Moreover, although some of the diagrams include arrows on communication paths to show a primary direction of communication, it is to be understood that communication may occur in the opposite direction relative to the depicted arrows.

## Claims

1. A method for multi-node analysis, the method comprising:
- receiving (201, 401) a performance indicator equation, wherein:
• the performance indicator equation comprises a corresponding set of measurement parameters; and
• the performance indicator equation defines a relationship between the corresponding set of measurement parameters and a performance indicator corresponding to the performance indicator equation;
- for each node from a set of nodes (103-1, ..., 103-15):
• receiving (203), from a database, a set of measurement values for that node, wherein the set of measurement values for that node comprises a current value for each measurement parameter comprised by the performance indicator equation; and
• determining (202, 204) that node's contribution to a cluster value for the performance indicator corresponding to the performance indicator equation based on the set of measurement values for that node; wherein the cluster value for the performance indicator corresponding to the performance indicator equation is a value equal to a result of calculating the performance indicator equation with measurement values for all nodes from the set of nodes (103-1, ..., 103-15) for each measurement parameter comprised by the performance indicator equation,
and
- reporting (205) performance indicator information for the set of nodes (103-1, ..., 103-15) wherein the reported performance indicator information is based on relative contributions of each node from the set of nodes to the cluster value for the performance indicator corresponding to the performance indicator equation.

2. The method of claim 1, wherein:
- the method comprises, after receiving (201, 401) the performance indicator equation, determining a contribution equation (202), wherein the contribution equation relates the corresponding set of measurement parameters comprised by the performance indicator equation and a contribution to the performance indicator corresponding to the performance indicator equation; and
- for each node from the set of nodes (103-1, ..., 103-15), determining (202, 204) that node's contribution to the performance indicator corresponding to the performance indicator equation based on the set of measurement values for that node is performed based on calculating the contribution equation with the set of measurement values for that node.

3. The method of claim 2, wherein determining (202, 204) the contribution equation comprises:
- classifying (301) the performance indicator equation, wherein classifying the performance indicator equation comprises identifying (407) the performance indicator equation as belonging to a class from a plurality of classes; and
- determining (302) the contribution equation based on the class.

4. The method of claim 3, wherein:
- classifying (301) the performance indicator equation is performed by a processor programmed with a set of instructions, wherein the set of instructions configure the processor to:
• receive (201, 401) an input performance indicator equation comprising an input set of measurement parameters;
• determine (402) if a first class condition is satisfied, wherein the first class condition corresponds to a first class and comprises the input performance indicator equation comprising a weighted average of the input set of measurement parameters;
• determine (403) if a second class condition is satisfied, wherein the second class condition corresponds to a second class and comprises the input performance indicator equation omitting both averaging and division;
• determine (404) if a third class condition is satisfied, wherein the third class condition corresponds to a third class and comprises the input performance indicator equation comprising:
- a division operation with one or more measurement parameters comprised by the input performance indicator equation in both numerator and denominator; and
- no other division operations;
• determine (405) if a fourth class condition is satisfied, wherein the fourth class condition corresponds to a fourth class and comprises the input performance indicator equation comprising:
- a division operation in which either the numerator or the denominator comprises one or more measurement parameters and either the numerator or the denominator comprises no measurement parameters; and
- no other division operations;
• determine (406) if a fifth class condition is satisfied, wherein the fifth class condition corresponds to a fifth class and comprises the input performance indicator equation comprising a plurality of division operations, wherein each division operation from the plurality of division operations comprises a measurement parameter from the input set of measurement parameters; and
• in the event that one of the first through fifth class conditions is determined to be satisfied, identify (407) the input performance indicator equation as belonging to the class whose corresponding condition is determined to be satisfied; and
- classifying (301) the performance indicator equation comprises providing the performance indicator equation to the processor programmed with the set of instructions as the input performance indicator equation.

5. The method of claim 4, wherein determining (302) the contribution equation based on the class comprises:
- in the event that one or more class conditions from a group of conditions consisting of:
• the first class condition; and
• the fourth class condition;
is determined to be satisfied, determine (505) the contribution equation as summing the input set of measurement parameters;
- in the event that the second class condition is determined to be satisfied, determine (502) the contribution equation as the same as the input performance indicator equation; and
- in the event that one or more conditions from a group of conditions consisting of:
• the third class condition; and
• the fifth class condition;
is determined to be satisfied, determine (508) the contribution equation as denominator measurement parameters from the input performance indicator equation less numerator measurement parameters from the input performance indicator equation.

6. The method of claim 5, wherein determining (508) the contribution equation as denominator measurement parameters from the input performance indicator equation less numerator measurement parameters from the input performance indicator equation comprises is based on:
- removing any constant values from the input performance indicator equation; and
- deriving (506) an abstract syntax tree corresponding to the input performance indicator equation; and
- traversing (507) the abstract syntax tree corresponding to the input performance indicator equation.

7. The method of any of claims 1 - 6, wherein:
- each node from the set of nodes (103-1, ..., 103-15) is comprised by a radio access network (101-1, ..., 101-3);
- the radio access network comprises a plurality of nodes;
- the set of nodes (103-1, ..., 103-15) is comprised by the plurality of nodes; and
- the method comprises determining the set of nodes based on:
• identifying nodes from the plurality of nodes which have experienced configuration changes within a time window; and
• defining the set of nodes as those nodes identified as experiencing configuration changes within the time window.

8. The method of any of claims 1 - 7, wherein:
- for each node from the set of nodes (103-1, ..., 103-15), the current value for each measurement parameter received from the database for that node is a value for that measurement parameter during a current evaluation window having a start time and an end time;
- the method comprises determining (900) a historical evaluation window based on:
• determining (902) whether the start time and the end time of the current evaluation window take place on one day; and
• in the event that the start time and the end time of the current evaluation window do not take place on one day, determining (903) whether the start time and the end time of the current evaluation window take place on weekend or non-weekend days;
and
- for each node from the set of nodes, the set of measurement values received from the database for that node comprises a historical value for each measurement parameter comprised by the performance indicator equation, wherein the historical value for each measurement parameter received from the database for that node is a value for that measurement parameter during the historical evaluation window.

9. The method of claim 8, wherein:
- the performance indicator equation is comprised by a set of performance indicator equations;
- the method comprises:
• obtaining (1001) a set of correlation values based on, for each performance indicator equation, calculating a correlation between:
- a cluster value for a performance indicator corresponding to that performance indicator equation for the current evaluation window; and
- a cluster value for the performance indicator corresponding to that performance indicator equation for the historical evaluation window;
• comparing (1002) the correlation between the performance indicator corresponding to the performance indicator equation with one or more correlations calculated for other performance indicators corresponding to other performance indicator equations from the set of performance indicator equations.

10. The method of any of claims 1 - 9, wherein the method comprises:
- determining a maximum contribution, wherein the maximum contribution is a highest contribution of any node from the set of nodes (103-1, ..., 103-15) to the cluster value for the performance indicator corresponding to the performance indicator equation;
- determining a minimum contribution, wherein the minimum contribution is a lowest contribution of any node from the set of nodes to the cluster value for the performance indicator corresponding to the performance indicator equation; and
- prioritizing (206) remediation activities among nodes from the set of nodes based on the minimum contribution and the maximum contribution.

11. The method of claim 10, wherein prioritizing (206) remediation activities among nodes from the set of nodes (103-1, ..., 103-15) is further based on:
- determining a median value of the contributions to the cluster value for the performance indicator corresponding to the performance indicator equation of the nodes from the set of nodes; and
- determining a mean value of the contributions to the cluster value for the performance indicator corresponding to the performance indicator equation of the nodes from the set of nodes.

12. The method of any of claims 1 to 11, wherein the method comprises prioritizing remediation activities among the set of nodes (103-1, ..., 103-15) based on the nodes' contributions to the cluster value for the performance indicator corresponding to the performance indicator equation.

13. The method of any of claims 1 - 11, wherein the method is performed by a service provider to a network operator.

14. An apparatus for multi-node analysis, the apparatus comprising one or more processors configured with instructions operable to, when executed, perform a method according to any of claims 1 - 11.

15. A computer program product for multi-node analysis comprising a non-transitory machine-readable storage medium having program instructions thereon, which are configured to, when executed by one or more processors, perform a method of any of claims 1 to 11.

## Patentansprüche

1. Verfahren zur Mehrfachknotenanalyse, wobei das Verfahren Folgendes umfasst:
- Empfangen (201, 401) einer Leistungsindikatorgleichung, wobei:
• die Leistungsindikatorgleichung einen entsprechenden Satz von Messparametern umfasst; und
• die Leistungsindikatorgleichung eine Beziehung zwischen dem entsprechenden Satz von Messparametern und einem Leistungsindikator definiert, der der Leistungsindikatorgleichung entspricht;
- für jeden Knoten aus einem Satz von Knoten (103-1, ..., 103-15):
• Empfangen (203) eines Satzes von Messwerten für diesen Knoten aus einer Datenbank, wobei der Satz von Messwerten für diesen Knoten einen aktuellen Wert für jeden in der Leistungsindikatorgleichung umfassten Messparameter umfasst; und
• Bestimmen (202, 204) des Beitrags dieses Knotens zu einem Clusterwert für den Leistungsindikator, der der Leistungsindikatorgleichung entspricht, basierend auf dem Satz von Messwerten für diesen Knoten; wobei der Clusterwert für den Leistungsindikator, der der Leistungsindikatorgleichung entspricht, ein Wert gleich einem Ergebnis des Berechnens der Leistungsindikatorgleichung mit Messwerten für alle Knoten aus dem Satz von Knoten (103-1, ..., 103-15) für jeden in der Leistungsindikatorgleichung umfassten Messparameter ist,
und
- Melden (205) von Leistungsindikatorinformationen für den Satz von Knoten (103-1, ..., 103-15), wobei die gemeldeten Leistungsindikatorinformationen auf relativen Beiträgen jedes Knotens aus dem Satz von Knoten zu dem Clusterwert für den Leistungsindikator basieren, der der Leistungsindikatorgleichung entspricht.

2. Verfahren nach Anspruch 1, wobei:
- das Verfahren nach dem Empfangen (201, 401) der Leistungsindikatorgleichung Bestimmen einer Beitragsgleichung (202) umfasst, wobei die Beitragsgleichung den entsprechenden Satz von Messparametern, der in der Leistungsindikatorgleichung umfasst ist, und einen Beitrag zu dem Leistungsindikator, der der Leistungsindikatorgleichung entspricht, in Beziehung zueinander setzt; und
- wobei für jeden Satz aus dem Satz von Knoten (103-1, ..., 103-15) das Bestimmen (202, 204) des Beitrags dieses Knotens zu dem Leistungsindikator, der der Leistungsindikatorgleichung entspricht, basierend auf dem Satz von Messwerten für diesen Knoten basierend auf dem Berechnen der Beitragsgleichung mit dem Satz von Messwerten für diesen Knoten erfolgt.

3. Verfahren nach Anspruch 2, wobei das Bestimmen (202, 204) der Beitragsgleichung Folgendes umfasst:
- Klassifizieren (301) der Leistungsindikatorgleichung, wobei das Klassifizieren der Leistungsindikatorgleichung Identifizieren (407) der Leistungsindikatorgleichung als zu einer Klasse aus einer Mehrzahl von Klassen gehörig umfasst; und
- Bestimmen (302) der Beitragsgleichung basierend auf der Klasse.

4. Verfahren nach Anspruch 3, wobei:
- das Klassifizieren (301) der Leistungsindikatorgleichung von einem Prozessor durchgeführt wird, der mit einem Satz von Anweisungen programmiert ist, wobei der Satz von Anweisungen den Prozessor für Folgendes konfiguriert:
• Empfangen (201, 401) einer eingegebenen Leistungsindikatorgleichung, die einen eingegebenen Satz von Messparametern umfasst;
• Bestimmen (402), ob eine Bedingung einer ersten Klasse erfüllt ist, wobei die Bedingung der ersten Klasse einer ersten Klasse entspricht und die eingegebene Leistungsindikatorgleichung umfasst, die einen gewichteten Mittelwert des eingegebenen Satzes von Messparametern umfasst;
• Bestimmen (403), ob eine Bedingung einer zweiten Klasse erfüllt ist, wobei die Bedingung der zweiten Klasse einer zweiten Klasse entspricht und die eingegebene Leistungsindikatorgleichung umfasst, wobei sowohl Mittelwertbildung als auch Division weggelassen werden;
• Bestimmen (404), ob eine Bedingung einer dritten Klasse erfüllt ist, wobei die Bedingung der dritten Klasse einer dritten Klasse entspricht und die eingegebene Leistungsindikatorgleichung umfasst, die Folgendes umfasst:
- eine Divisionsoperation mit einem oder mehreren Messparametern, die in der Leistungsindikatorgleichung sowohl im Zähler als auch im Nenner umfasst sind; und
- keine anderen Divisionsoperationen;
• Bestimmen (405), ob eine Bedingung einer vierten Klasse erfüllt ist, wobei die Bedingung der vierten Klasse einer vierten Klasse entspricht und die eingegebene Leistungsindikatorgleichung umfasst, die Folgendes umfasst:
- eine Divisionsoperation, in der entweder der Zähler oder der Nenner einen oder mehrere Messparameter umfasst und entweder der Zähler oder der Nenner keine Messparameter umfasst; und
- keine anderen Divisionsoperationen;
• Bestimmen (406), ob eine Bedingung einer fünften Klasse erfüllt ist, wobei die Bedingung der fünften Klasse einer fünften Klasse entspricht und die eingegebene Leistungsindikatorgleichung umfasst, die eine Mehrzahl von Divisionsoperationen umfasst, wobei jede Divisionsoperation aus der Mehrzahl von Divisionsoperationen einen Messparameter aus dem eingegebenen Satz von Messparametern umfasst; und
• falls bestimmt wird, dass eine der Bedingungen der ersten bis fünften Klasse erfüllt ist, Identifizieren (407) der eingegebenen Leistungsindikatorgleichung als zu der Klasse gehörig, deren entsprechende Bedingung als erfüllt bestimmt wird;
und
- wobei das Klassifizieren (301) der Leistungsindikatorgleichung Bereitstellen der Leistungsindikatorgleichung für den Prozessor, der mit dem Satz von Anweisungen konfiguriert ist, als die eingegebene Leistungsindikatorgleichung umfasst.

5. Verfahren nach Anspruch 4, wobei das Bestimmen (302) der Beitragsgleichung basierend auf der Klasse Folgendes umfasst:
- falls eine oder mehrere Klassenbedingungen aus einer Gruppe von Bedingungen bestehend aus:
• der Bedingung der ersten Klasse und
• der Bedingung der vierten Klasse;
als erfüllt bestimmt werden, Bestimmen (505) der Beitragsgleichung als Summierung des eingegebenen Satzes von Messparametern;
- falls die Bedingung der zweiten Klasse als erfüllt bestimmt wird, Bestimmen (502) der Beitragsgleichung als gleich der eingegebenen Leistungsindikatorgleichung; und
- falls eine oder mehrere Klassenbedingungen aus einer Gruppe von Bedingungen bestehend aus:
• der Bedingung der dritten Klasse und
• der Bedingung der fünften Klasse;
als erfüllt bestimmt werden, Bestimmen (508) der Beitragsgleichung als Nenner-Messparameter aus der eingegebenen Leistungsindikatorgleichung abzüglich der Zähler-Messparameter aus der eingegebenen Leistungsindikatorgleichung.

6. Verfahren nach Anspruch 5, wobei das Bestimmen (508) der Beitragsgleichung als Nenner-Messparameter aus der eingegebenen Leistungsindikatorgleichung abzüglich der Zähler-Messparameter aus der eingegebenen Leistungsindikatorgleichung umfasst, dass es auf Folgendem basiert:
- Entfernen aller konstanten Werte aus der eingegebenen Leistungsindikatorgleichung und
- Ableiten (506) eines abstrakten Syntaxbaums, der der eingegebenen Leistungsindikatorgleichung entspricht; und
- Traversieren (507) des abstrakten Syntaxbaums, der der eingegebenen Leistungsindikatorgleichung entspricht.

7. Verfahren nach einem der Ansprüche 1-6, wobei:
- jeder Knoten aus dem Satz von Knoten (103-1, ..., 103-15) in einem Funkzugangsnetzwerk (101-1, ..., 101-3) umfasst ist;
- das Funkzugangsnetzwerk eine Mehrzahl von Knoten umfasst;
- der Satz von Knoten (103-1, ..., 103-15) in der Mehrzahl von Knoten umfasst ist; und; und
- das Verfahren Bestimmen des Satzes von Knoten basierend auf Folgendem umfasst:
• Identifizieren von Knoten aus der Mehrzahl von Knoten, die Konfigurationsänderungen innerhalb eines Zeitfensters erfahren haben; und
• Definieren des Satzes von Knoten als jene Knoten, die Konfigurationsänderungen innerhalb des Zeitfensters erfahren haben.

8. Verfahren nach einem der Ansprüche 1-7, wobei:
- für jeden Knoten aus dem Satz von Knoten (103-1, ..., 103-15) der aktuelle Wert für jeden Messparameter, der für diesen Knoten aus der Datenbank empfangen wird, ein Wert für diesen Messparameter während eines aktuellen Bewertungsfensters mit einer Startzeit und einer Endzeit ist;
- das Verfahren Bestimmen (900) eines historischen Bewertungsfenster basierend auf Folgendem umfasst:
• Bestimmen (902), ob die Startzeit und die Endzeit des aktuellen Bewertungsfensters sich an einem Tag ereignen; und
• falls die Startzeit und die Endzeit der aktuellen Bewertungsfensters sich nicht an einem Tag ereignen, Bestimmen (903), ob die Startzeit und die Endzeit des aktuellen Bewertungsfensters sich an Wochenenden oder Wochentagen ereignen;
und
- für jeden Knoten aus dem Satz von Knoten der Satz von Messwerten, der für diesen Knoten aus der Datenbank empfangen wird, einen historischen Wert für jeden in der Leistungsindikatorgleichung umfassten Messparameter umfasst, wobei der historische Wert für jeden Messparameter, der für diesen Knoten aus der Datenbank empfangen wird, ein Wert für diesen Messparameter während des historischen Bewertungsfensters ist.

9. Verfahren nach Anspruch 8, wobei:
- die Leistungsindikatorgleichung in einem Satz von Leistungsindikatorgleichungen umfasst ist;
- das Verfahren Folgendes umfasst:
• Erhalten (1001) eines Satzes von Korrelationswerten, die für jede Leistungsindikatorgleichung auf einem Berechnen einer Korrelation zwischen Folgenden basieren:
- einem Clusterwert für einen Leistungsindikator, der dieser Leistungsindikatorgleichung für das aktuelle Bewertungsfenster entspricht; und
- einem Clusterwert für den Leistungsindikator, der dieser Leistungsindikatorgleichung für das historische Bewertungsfenster entspricht;
• Vergleichen (1002) der Korrelation zwischen dem Leistungsindikator, der der Leistungsindikatorgleichung entspricht, mit einer oder mehreren Korrelationen, die für andere Leistungsindikatoren berechnet werden, die anderen Leistungsindikatorgleichungen aus dem Satz von Leistungsindikatorgleichungen entsprechen.

10. Verfahren nach einem der Ansprüche 1-9, wobei das Verfahren Folgendes umfasst:
- Bestimmen eines Höchstbeitrags, wobei der Höchstbeitrag ein höchster Beitrag eines Knotens aus dem Satz von Knoten (103-1, ..., 103-15) zu dem Clusterwert für den Leistungsindikator ist, der der Leistungsindikatorgleichung entspricht;
- Bestimmen eines Mindestbeitrags, wobei der Mindestbeitrag ein niedrigster Beitrag eines Knotens aus dem Satz von Knoten zu dem Clusterwert für den Leistungsindikator ist, der der Leistungsindikatorgleichung entspricht; und
- Priorisieren (206) von Verbesserungsaktivitäten unter Knoten aus dem Satz von Knoten basierend auf dem Mindestbeitrag und dem Höchstbeitrag.

11. Verfahren nach Anspruch 10, wobei das Priorisieren (206) von Verbesserungsaktivitäten unter Knoten aus dem Satz von Knoten (103-1, ..., 103-15) ferner auf Folgendem basiert:
- Bestimmen eines Medianwerts der Beiträge der Knoten aus dem Satz von Knoten zu dem Clusterwert für den Leistungsindikator, der der Leistungsindikatorgleichung entspricht; und
- Bestimmen eines Mittelwerts der Beiträge der Knoten aus dem Satz von Knoten zu dem Clusterwert für den Leistungsindikator, der der Leistungsindikatorgleichung entspricht.

12. Verfahren nach einem der Ansprüche 1 bis 11, wobei das Verfahren Priorisieren von Verbesserungsaktivitäten unter dem Satz von Knoten (103-1, ..., 103-15) basierend auf den Beiträgen dieser Knoten zu dem Clusterwert für den Leistungsindikator umfasst, der der Leistungsindikatorgleichung entspricht.

13. Verfahren nach einem der Ansprüche 1-11, wobei das Verfahren von einem ersten Dienstanbieter für einen Netzwerkbetreiber durchgeführt wird.

14. Vorrichtung zur Mehrfachknotenanalyse, wobei die Vorrichtung einen oder mehrere Prozessoren umfasst, die mit Anweisungen konfiguriert sind, die bei Ausführung zum Durchführen eines Verfahrens nach einem der Ansprüche 1-11 ausgelegt sind.

15. Computerprogrammprodukt zur Mehrfachknotenanalyse, umfassend ein nichtflüchtiges maschinenlesbares Speichermedium mit darauf gespeicherten Programmanweisungen, die so konfiguriert sind, dass sie bei Ausführung durch einen oder mehrere Prozessoren ein Verfahren nach einem der Ansprüche 1 bis 11 durchführen.

## Revendications

1. Procédé d'analyse multinœuds, le procédé comprenant :
- la réception (201, 401) d'une équation d'indicateur de performance, dans lequel :
• l'équation d'indicateur de performance comprend un ensemble correspondant de paramètres de mesure ; et
• l'équation d'indicateur de performance définit une relation entre l'ensemble correspondant de paramètres de mesure et un indicateur de performance correspondant à l'équation d'indicateur de performance ;
- pour chaque nœud d'un ensemble de nœuds (103-1, ..., 103-15) :
• la réception (203), depuis une base de données, d'un ensemble de valeurs de mesure pour ce nœud, dans lequel l'ensemble de valeurs de mesure pour ce nœud comprend une valeur actuelle pour chaque paramètre de mesure compris dans l'équation d'indicateur de performance ; et
• la détermination (202, 204) d'une contribution de ce nœud à une valeur de groupement pour l'indicateur de performance correspondant à l'équation d'indicateur de performance sur la base de l'ensemble de valeurs de mesure pour ce nœud ; dans lequel la valeur de groupement pour l'indicateur de performance correspondant à l'équation d'indicateur de performance est une valeur égale à un résultat de calcul de l'équation d'indicateur de performance avec des valeurs de mesure pour tous les nœuds de l'ensemble de nœuds (103-1, ..., 103-15) pour chaque paramètre de mesure compris dans l'équation d'indicateur de performance,
et
- le rapport (205) d'informations d'indicateur de performance pour l'ensemble de nœuds (103-1, ..., 103-15), dans lequel les informations d'indicateur de performance rapportées sont sur la base de contributions relatives de chaque nœud de l'ensemble de nœuds à la valeur de groupement pour l'indicateur de performance correspondant à l'équation d'indicateur de performance.

2. Procédé selon la revendication 1, dans lequel :
- le procédé comprend, après la réception (201, 401) de l'équation d'indicateur de performance, la détermination d'une équation de contribution (202), dans lequel l'équation de contribution met en relation l'ensemble correspondant de paramètres de mesure compris dans l'équation d'indicateur de performance avec une contribution à l'indicateur de performance correspondant à l'équation d'indicateur de performance ; et
- pour chaque nœud de l'ensemble de nœuds (103-1, ..., 103-15), la détermination (202, 204) d'une contribution de ce nœud à l'indicateur de performance correspondant à l'équation d'indicateur de performance sur la base de l'ensemble de valeurs de mesure pour ce nœud est réalisée sur la base du calcul de l'équation de contribution avec l'ensemble de valeurs de mesure pour ce nœud.

3. Procédé selon la revendication 2, dans lequel la détermination (202, 204) de l'équation de contribution comprend :
- la classification (301) de l'équation d'indicateur de performance, dans lequel la classification de l'équation d'indicateur de performance comprend l'identification (407) que l'équation d'indicateur de performance appartient à une classe parmi une pluralité de de classes ; et
- la détermination (302) de l'équation de contribution sur la base de la classe.

4. Procédé selon la revendication 3, dans lequel :
- la classification (301) de l'équation d'indicateur de performance est réalisée par un processeur programmé avec un ensemble d'instructions, dans lequel l'ensemble d'instructions configure le processeur pour :
• recevoir (201, 401) une équation d'indicateur de performance d'entrée comprenant un ensemble de paramètres de mesure d'entrée ;
• déterminer (402) si une condition de première classe est remplie, dans lequel la condition de première classe correspond à une première classe et comprend l'équation d'indicateur de performance d'entrée comprenant une moyenne pondérée de l'ensemble de paramètres de mesure d'entrée ;
• déterminer (403) si une condition de deuxième classe est remplie, dans lequel la condition de deuxième classe correspond à une deuxième classe et comprend l'équation d'indicateur de performance d'entrée en omettant la moyenne et la division ;
• déterminer (404) si une condition de troisième classe est remplie, dans lequel la condition de troisième classe correspond à une troisième classe et comprend l'équation d'indicateur de performance d'entrée comprenant :
- une opération de division avec un ou plusieurs paramètres de mesure compris dans l'équation d'indicateur de performance d'entrée dans le numérateur et le dénominateur ; et
- aucune autre opération de division ;
• déterminer (405) si une condition de quatrième classe est remplie, dans lequel la condition de quatrième classe correspond à une quatrième classe et comprend l'équation d'indicateur de performance d'entrée comprenant :
- une opération de division dans laquelle le numérateur ou le dénominateur comprend un ou plusieurs paramètres de mesure et le numérateur ou le dénominateur ne comprend aucun paramètre de mesure ; et
- aucune autre opération de division ;
• déterminer (406) si une condition de cinquième classe est remplie, dans lequel la condition de cinquième classe correspond à une cinquième classe et comprend l'équation d'indicateur de performance d'entrée comprenant une pluralité d'opérations de division, dans lequel chaque opération de division de la pluralité d'opérations de division comprend un paramètre de mesure de l'ensemble de paramètres de mesure d'entrée ; et
• dans le cas où il est déterminé que l'une des conditions de première à cinquième classes est remplie, identifier (407) que l'équation d'indicateur de performance d'entrée appartient à la classe dont une condition correspondante est déterminée comme étant remplie ;
et
- la classification (301) de l'équation d'indicateur de performance comprend la fourniture de l'équation d'indicateur de performance au processeur programmé avec l'ensemble d'instructions comme l'équation d'indicateur de performance d'entrée.

5. Procédé selon la revendication 4, dans lequel la détermination (302) de l'équation de contribution sur la base de la classe comprend :
- dans le cas où il est déterminé qu'une ou plusieurs conditions de classes d'un groupe de conditions se composant de :
• la condition de première classe ; et
• la condition de quatrième classe ;
sont remplies, déterminer (505) que l'équation de contribution est la somme de l'ensemble de paramètres de mesure d'entrée ;
- dans le cas où il est déterminé que la condition de deuxième classe est remplie, déterminer (502) que l'équation de contribution est la même que l'équation d'indicateur de performance d'entrée ; et
- dans le cas où il est déterminé qu'une ou plusieurs conditions d'un groupe de conditions se composant de :
• la condition de troisième classe ; et
• la condition de cinquième classe ;
sont remplies, déterminer (508) que l'équation de contribution est des paramètres de mesure de dénominateur de l'équation d'indicateur de performance d'entrée moins des paramètres de mesure de numérateur de l'équation d'indicateur de performance d'entrée.

6. Procédé selon la revendication 5, dans lequel la détermination (508) que l'équation de contribution est des paramètres de mesure de dénominateur de l'équation d'indicateur de performance d'entrée moins des paramètres de mesure de numérateur de l'équation d'indicateur de performance d'entrée est basée sur :
- la suppression de toute valeur constante de l'équation d'indicateur de performance d'entrée ; et
- la dérivation (506) d'un arbre de syntaxe abstraite correspondant à l'équation d'indicateur de performance d'entrée ; et
- le parcours (507) de l'arbre de syntaxe abstraite correspondant à l'équation d'indicateur de performance d'entrée.

7. Procédé selon l'une quelconque des revendications 1 à 6, dans lequel :
- chaque nœud de l'ensemble de nœuds (103-1, ..., 103-15) est compris dans un réseau d'accès radio (101-1, ..., 101-3) ;
- le réseau d'accès radio comprend une pluralité de nœuds ;
- l'ensemble de nœuds (103-1, ..., 103-15) est compris dans la pluralité de nœuds ; et
- le procédé comprend la détermination de l'ensemble de nœuds sur la base de :
• l'identification de nœuds de la pluralité de nœuds qui ont subi des changements de configuration dans une fenêtre de temps ; et
• la définition de l'ensemble de nœuds comme les nœuds identifiés comme subissant des changements de configuration dans la fenêtre de temps.

8. Procédé selon l'une quelconque des revendications 1 à 7, dans lequel :
- pour chaque nœud de l'ensemble de nœuds (103-1, ..., 103-15), la valeur actuelle pour chaque paramètre de mesure reçue de la base de données pour ce nœud est une valeur pour ce paramètre de mesure dans une fenêtre d'évaluation actuelle présentant un temps de début et un temps de fin ;
- le procédé comprend la détermination (900) d'une fenêtre d'évaluation historique sur la base de :
• la détermination (902) si le temps de début et le temps de fin de la fenêtre d'évaluation actuelle sont ou non dans une journée ; et
• dans le cas où le temps de début et le temps de fin de la fenêtre d'évaluation actuelle ne sont pas dans une journée, la détermination (903) si le temps de début et le temps de fin de la fenêtre d'évaluation actuelle sont dans un weekend ou dans des journées hors weekend ;
et
- pour chaque nœud de l'ensemble de nœuds, l'ensemble de valeurs de mesure reçues de la base de données pour ce nœud comprend une valeur historique pour chaque paramètre de mesure compris dans l'équation d'indicateur de performance, dans lequel la valeur historique pour chaque paramètre de mesure reçue depuis la base de données pour ce nœud est une valeur pour ce paramètre de mesure dans la fenêtre d'évaluation historique.

9. Procédé selon la revendication 8, dans lequel :
- l'équation d'indicateur de performance est comprise dans un ensemble d'équations d'indicateur de performance ;
- le procédé comprend :
• l'obtention (1001) d'un ensemble de valeurs de corrélation sur la base, pour chaque équation d'indicateur de performance, du calcul d'une corrélation entre :
- une valeur de groupement pour un indicateur de performance correspondant à cette équation d'indicateur de performance pour la fenêtre d'évaluation actuelle ; et
- une valeur de groupement pour l'indicateur de performance correspondant à cette équation d'indicateur de performance pour la fenêtre d'évaluation historique ;
• la comparaison (1002) de la corrélation pour l'indicateur de performance correspondant à l'équation d'indicateur de performance à une ou plusieurs corrélations calculées pour d'autres indicateurs de performance correspondant à d'autres équations d'indicateur de performance de l'ensemble d'équations d'indicateur de performance.

10. Procédé selon l'une quelconque des revendications 1 à 9, dans lequel le procédé comprend :
- la détermination d'une contribution maximale, dans lequel la contribution maximale est une contribution la plus élevée de tout nœud de l'ensemble de nœuds (103-1, ..., 103-15) à la valeur de groupement pour l'indicateur de performance correspondant à l'équation d'indicateur de performance ;
- la détermination d'une contribution minimale, dans lequel la contribution minimale est une contribution la plus basse de tout nœud de l'ensemble de nœuds à la valeur de groupement pour l'indicateur de performance correspondant à l'équation d'indicateur de performance ; et
- la priorisation (206) d'activités de remédiation parmi des nœuds de l'ensemble de nœuds sur la base de la contribution minimale et de la contribution maximale.

11. Procédé selon la revendication 10, dans lequel la priorisation (206) d'activités de remédiation parmi des nœuds de l'ensemble de nœuds (103-1, ..., 103-15) est en outre sur la base de :
- la détermination d'une valeur médiane des contributions à la valeur de groupement pour l'indicateur de performance correspondant à l'équation d'indicateur de performance des nœuds de l'ensemble de nœuds ; et
- la détermination d'une valeur moyenne des contributions à la valeur de groupement pour l'indicateur de performance correspondant à l'équation d'indicateur de performance des nœuds de l'ensemble de nœuds.

12. Procédé selon l'une quelconque des revendications 1 à 11, dans lequel le procédé comprend la priorisation d'activités de remédiation parmi l'ensemble de nœuds (103-1, ..., 103-15) sur la base des contributions des nœuds à la valeur de groupement pour l'indicateur de performance correspondant à l'équation d'indicateur de performance.

13. Procédé selon l'une quelconque des revendications 1 à 11, dans lequel le procédé est réalisé par un fournisseur de service à un opérateur de réseau.

14. Appareil d'analyse multinœuds, l'appareil comprenant un ou plusieurs processeurs configurés avec des instructions exploitables, lorsqu'elles sont exécutées, pour réaliser un procédé selon l'une quelconque des revendications 1 à 11.

15. Produit programme informatique d'analyse multinœuds comprenant un support de stockage non transitoire lisible par machine stockant des instructions de programme qui sont configurées pour, lorsqu'elles sont exécutées par un ou plusieurs processeurs, réaliser un procédé selon l'une quelconque des revendications 1 à 11.
